# EUROPEAN PATENT SPECIFICATION

(11) **EP 1 159 118 B1**
(45) Date of publication and mention of the grant of the patent: **29.09.2004**
(21) Application number: 00906052.6
(22) Date of filing: 11.02.2000
(51) Int. Cl.: B29C 45/26, B29C 45/42, B29C 33/44, B29L 31/56

(54) **APPARATUS AND METHOD FOR MANUFACTURING MOULDED SYNTHETIC CLOSURE AND MANUFACTURED CLOSURE**
VORRICHTUNG UND HERSTELLUNGSVERFAHREN VON SPRITZGEGOSSENEN SYNTHETISCHEN VERSCHLÜSSEN, SOWIE HERGESTELLTER VERSCHLUSS
APPAREIL ET PROCEDE DE FABRICATION DE FERMETURES SYNTHETIQUES MOULEES, AINSI QUE FERMETURE FABRIQUEE

(30) Priority: 11.02.1999 AU PP863499; 16.06.1999 AU PP098699
(43) Date of publication of application: 05.12.2001
(73) Proprietor: C.T.E.B. Equipment PTY. Ltd., Marayong, New South Wales 2148 (AU)
(72) Inventor: HIGGINS, Christopher, Lyndon, Arcadia, New South Wales 2159 (AU); IRWIN, Liam, Stephen, Kirrawee, New South Wales 2232 (AU)
(74) Representative: McKechnie, Neil Henry
(86) International application number: PCT/AU2000/000100
(87) International publication number: WO 2000/047390

(56) References cited:
- EP-A- 0 924 042
- EP-A1- 0 097 783
- EP-A1- 0 924 042
- EP-A2- 0 156 957
- US-A- 4 413 744
- US-A- 4 783 292
- PATENT ABSTRACTS OF JAPAN vol. 005, no. 203 (M-103), 23 December 1981 (1981-12-23) & JP 56 118828 A (JAPAN STYRENE PAPER CO LTD), 18 September 1981 (1981-09-18)
- PATENT ABSTRACTS OF JAPAN vol. 008, no. 267 (M-343), 7 December 1984 (1984-12-07) & JP 59 138421 A (TAISEI KAKOU KK), 8 August 1984 (1984-08-08)
- PATENT ABSTRACTS OF JAPAN vol. 013, no. 369 (M-860), 16 August 1989 (1989-08-16) & JP 01 125212 A (OSAKA SANKO GOSEI JUSHI KOGYO KK), 17 May 1989 (1989-05-17)

## Description

### TECHNICAL FIELD

The present invention relates to moulded synthetic closures and to methods and apparatus for making the same. More particularly, the invention relates to closures for liquid product containers, and particularly concerns closures for containers of wine or wine-based products, other beverages, and other comestibles. More specifically, the present invention relates to moulded synthetic plastic closures which constitute an alternative to or substitute for natural cork.

### BACKGROUND ART

Synthetic plastic closures for wine or other liquid product containers are known. However, such closures have hitherto had little or no commercial success largely because of their tendency to noticeably taint the product and, or because of the relatively low resistance which they present to oxygen permeation into the container.

It is known heretofore to manufacture articles from foamed thermoplastic material by injection or extrusion of polyurethane, polystyrene or polyolefins. In these cases, the thermoplastic materials may be expanded from a granular form to assume a porous, solidified foam-like structure by the action of various propellants or agents for expanding or blowing the materials. The blowing agents, in accordance with normal practice, are usually gases or gas generating substances that have been dissolved or otherwise intimately incorporated within the thermoplastic resinous material while it is in an unexpanded granular form. The application of heat to such a mixture causes the blowing agent to be released or thermally expanded or both, while the thermoplastic material is attaining a foaming temperature at which it is sufficiently softened and yieldable to permit the pressure of the expanding blowing agent to expand it into the desired foam structure, see for example US Patent No. US. 4,783,292.

In a special case of extrusion forming of foamed thermoplastic material, it is also known to decorate the surface of articles so produced to resemble natural wood or cork by imparting to the surface a parallel grain structure. Such decoration is accomplished by extruding the material through a die having, in particular, a multiple number of apertures to form a corresponding number of strands of expanding resin, collecting these strands in parallel relationship, and then coalescing them into a body of any desired length. Contacting surfaces of the strands create parallel grain lines which remain clearly visible in the surface of the finished articles and resemble natural wood grain.

In a special case of injection moulding of foam thermoplastics, it is known to mould articles by injecting into an enclosed cavity a measured amount of expandable thermoplastic resin so that the cavity is not completely filled by the unexpanded material but becomes filled as the material expands. As expansion occurs, the softened resin is forced by a gaseous blowing agent into contact with the relatively cool walls of the mould cavity where the portion of the resin in direct contact with the walls is solidified and forms a dense outer layer or skin conforming to the shape of the cavity and functioning as a barrier, thereby preventing the escape of the gaseous blowing agent from the article and causing gas bubbles to be entrapped in the article's interior region. Thus, articles moulded in this manner are characterised by a porous, foam-like interior and a dense outer shell or skin having the same general size and shape as the mould cavity and which are essentially impermeable to most substances.

US Patent No. US 4,413,744 teaches of apparatus for producing an expanded plastic bottle stopper. This apparatus comprises a piston means whose distal end constitutes an end wall of a cavity having a predetermined volume into which an expandable plastic material is injected. Once the plastic material has expanded within the predetermined cavity volume the piston is employed as an ejector for removal of the bottle stopper.

European Patent Application No. EP 0,924,042 A teaches of a further process and apparatus for moulding plastic articles that also employs a cavity having a predetermined volume and a piston. The predetermined cavity volume is again filled with a plastic resin and thereafter the piston is caused to retract so as to increase the volume of the cavity. At the end of the process the piston is employed to eject the plastic article.

By employing certain highly flexible thermoplastic materials, for example polyolefin ethylenevinylacetate, in the previously described injection moulding process, the resulting foamed articles will exhibit elastic properties closely resembling similar products manufactured from other natural and synthetic elastomers. This flexibility and resiliency plus the presence of an essentially impermeable skin allows these same articles if moulded into the proper size and shape, to function as closures for liquid product containers by being compressed and fitted into the container opening, then being allowed to expand, filling the opening and creating a continuous seal about its perimeter.

Therefore, such articles would theoretically be useful as replacements for similar closure devices manufactured of more familiar materials, such as natural cork used in containers of medicine, wine and spirits. In reality, efforts at replacing natural cork closures in liquid product containers, especially containers for wine products, by manufacturing and utilising closures from injection moulded foamed thermoplastics have not been very successful. This has been due primarily, it is believed, to the lack of aesthetically created consumer appeal for such closures, and the relationship of the dense outer skin to the porous inner core which dense outer skin, while necessary to make the closure essentially impermeable, can be a detriment to the scaling function of these articles, particularly when leakage channels are formed on the dense outer skin during the sealing of these articles.

Since such prior art closures must be compressed to be fitted into liquid product containers there is a tendency for the dense outer layer of the closures to wrinkle and form longitudinal channels in the outer surface of the foamed articles. Such channels could form leakage paths for the container contents or allow the ingress of substances harmful to the product being contained, such as ambient air in the case of the medicine or food products.

Tests have shown that these channels are caused primarily by the presence of relatively large void spaces between the dense outer skins and the porous inner core of the foamed articles, their presence being the result of a previously unrecognised phenomena occurring during the moulding of the articles. Since the dense outer skin has a much higher resistance to compression than the porous inner core, it tends to deflect into any available void space, creating a channel on the outer surface of the closure that could result in a disruption of the otherwise continuous perimeter seal.

In addition to the foregoing problems, prior art moulded closures have not been uniform and consistent in design and performance. Thus, such prior art closures have not been found readily acceptable as a replacement for similar closure devices, such as natural cork used in containers of medicine, wine and spirits. It is well known that natural cork contains various holes and crooks and many times will crumble and break when inserted or withdrawn from the product container.

U. S. Patent 4,363,849 discloses a method for making closures resembling natural cork for sealing liquid product containers, wherein a strand of expandable plastic material is injected into each mould cavity and is permitted to collect in that cavity in randomly oriented grounds of coils which expand to fill the cavity and coalesce to create randomly oriented grain lines on the surface of the closure resembling the appearance of natural cork.

Also described are methods of moulding the closures which are said to preclude the formation of leakage channels on the closure surface and preferred blends of plastic resins and pigment particulars used to achieve the cork-like appearance. U. S. Patent 4,499,141 is a divisional of U. S. Patent 4,363,849 and relates to moulded synthetic closure of this type and having a particular composition.

However, a major deficiency of the prior art is the apparatus is complex and therefore expensive, and the products produced are less than satisfactory because they allow air or oxygen permeation into the container.

### DISCLOSURE OF THE INVENTION

It is a primary object of the invention to provide a moulded synthetic closure and methods and apparatus for making the same which go at least some way towards overcoming or at least minimising the prior art problems or limitations outlined above, or at the very least provide a clear alternative choice for consumers or manufacturers.

It is another object of this invention to provide a moulded synthetic closure for liquid product containers which have a relatively uniform cellular or amorphous structure, such that when fitted to the container it presents a high resistance to oxygen permeation and/or product leakage through or around the closure to ensure a long shelf life for the product and yet produces little or no noticeable product tainting.

It is a further object of the present invention to provide a moulding method, and apparatus therefor, wherein the capacity of the mould cavity is variable during the moulding process through use of an ejector piston the leading or distal end of which comprises a movable end wall of the mould cavity.

It is yet another object of the present invention to provide a synthetic cork article and a means of making same which approaches many of the physical properties of natural cork when employed as a closure for a liquid product container.

It is another object of the present invention to provide a synthetic cork article and a means of making same that may be employed as a bottle stopper and is removable using an ordinary corkscrew.

It is another object of the present invention to provide a synthetic cork article and a means of making same which may be used as a cork substitute in existing bottling equipment without malfunction of said equipment.

It is another object of the present invention to provide a synthetic cork article that can be manufactured with uniformity and will not break or crumble when inserted or withdrawn from the product container.

Thus, the combined objectives of the present invention are to provide a synthetic cork article and a means of making same which will perform satisfactorily as a substitute for natural cork in a closure, or portion of a closure, for a liquid product container without fear of leakage into or out of said container and will satisfy the aesthetic requirement for a natural cork closure in such containers as those for wine and liquor products.

These and other objects of the invention will become more apparent from the following description and the drawings.

According to one aspect of the present invention, there is provided a mould apparatus for producing a moulded synthetic closure for a container, said mould apparatus including one or more mould cavities, a piston slidably engaged within each of said one or more cavities, wherein the distal end of said piston constitutes a movable end wall of its associated mould cavity, and wherein said piston acts as an ejector for removing the moulded product from the mould cavity characterised in that the capacity of said one or more cavities is variable during charging or filling of said one or more cavities by virtue of the movement of said piston.

According to a second aspect of the present invention, there is provided a method for manufacturing a moulded synthetic closure for a container, said synthetic closure having a substantially uniform cellular structure without large air trapped voids, said method comprising:
providing a mould cavity having a moveable end wall opposite an entrance orifice to said mould cavity wherein the moveable end wall is provided by an end face of a distal end of an ejector piston slidably mounted in said mould cavity
the injection at high speed of an expendable thermoplastic resinous material into said cavity via said entrance orifice in an amount less than required to fill the mould cavity and
allowing for the expansion of said resinous material against said end face
characterised in that
the capacity of said mould cavity is variable during charging or filling thereof, and whereby the capacity of the mould cavity further increases in a controlled manner during filling as required to accommodate the expanding thermoplastic material with minimal entrainment of air or other gaseous material.

According to a further aspect of the invention, there is provided a moulded synthetic closure for liquid product containers produced by the method or process of the invention, the product being a substitute for natural cork closures but having a regular relatively uniform cellular or amorphous structure throughout the core, and a liquid impervious outer skin contiguous with the inner core.

### BRIEF DESCRIPTION OF THE DRAWINGS

The objects of the present invention and the attendant advantages thereof will become more readily apparent by reference to the following drawings relating to a non-limiting embodiment of the invention. In the drawings:
- FIG. 1: is a cross-sectional view of a typical mould which could be used according to the present invention to manufacture closures for liquid product containers as a substitute or alternative for natural cork. The mould is depicted in the closed position and in the first stage of a product being moulded in situ.
- FIG. 2: is a further cross-sectional view of the mould of Fig. 1 in a further stage of filling of the mould cavity.
- FIG. 3: is another cross-sectional view of the same mould in the final stage of filling.
- FIG. 4: is an exploded or open view of the mould of Fig. 1, for ejection of the finished product.

### BEST MODE OF CARRYING OUT THE INVENTION

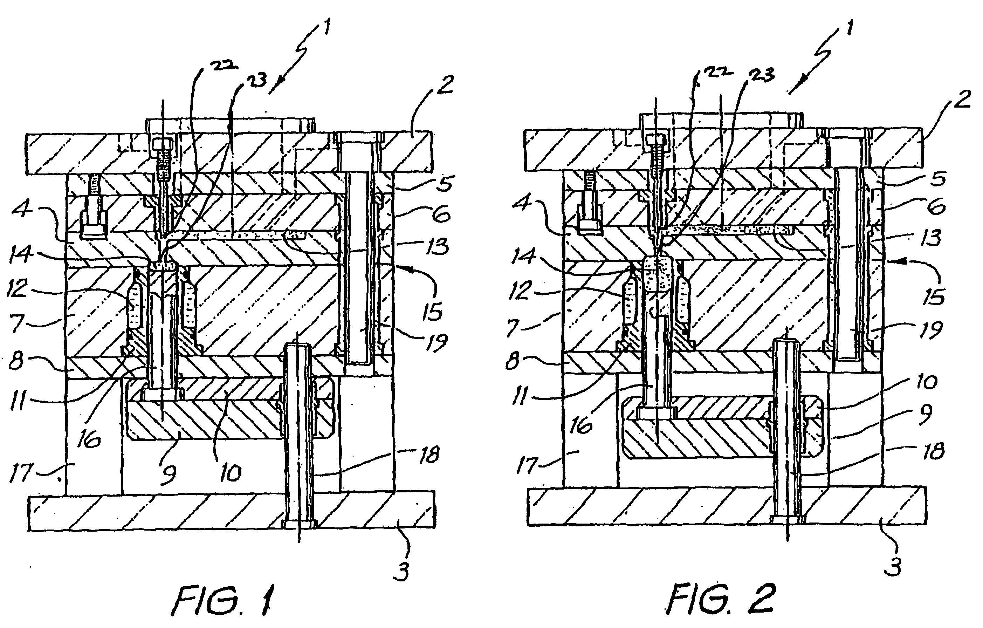

Referring to the drawings, Fig. 1 depicts the first stage in the operation of the mould 1. For the sake of clarity, only one of a possible plurality of mould cavities 14 is depicted, in a three-plate injection moulding tool or apparatus having a sprue/runner system whereby the thermoplastic material is injected into the mould cavities via the galleries of the sprue/runner system 13.

The injection moulding tool or apparatus 1 comprises in combination a top plate 2 and a back plate 3, a runner plate 4, a gasket plate 5, an intermediate plate 6, a cavity plate 7, a cavity insert retaining plate 8, an ejector plate 9 and an ejector retaining plate 10.

A cavity insert 11 with external cooling water chambers 12 defines a variable cavity space 14 between the lower end of the runner plate 4 and the top end of slidably mounted ejector cavity pin 16 which is attached to the ejector plate 9 and ejector retaining plate 10.

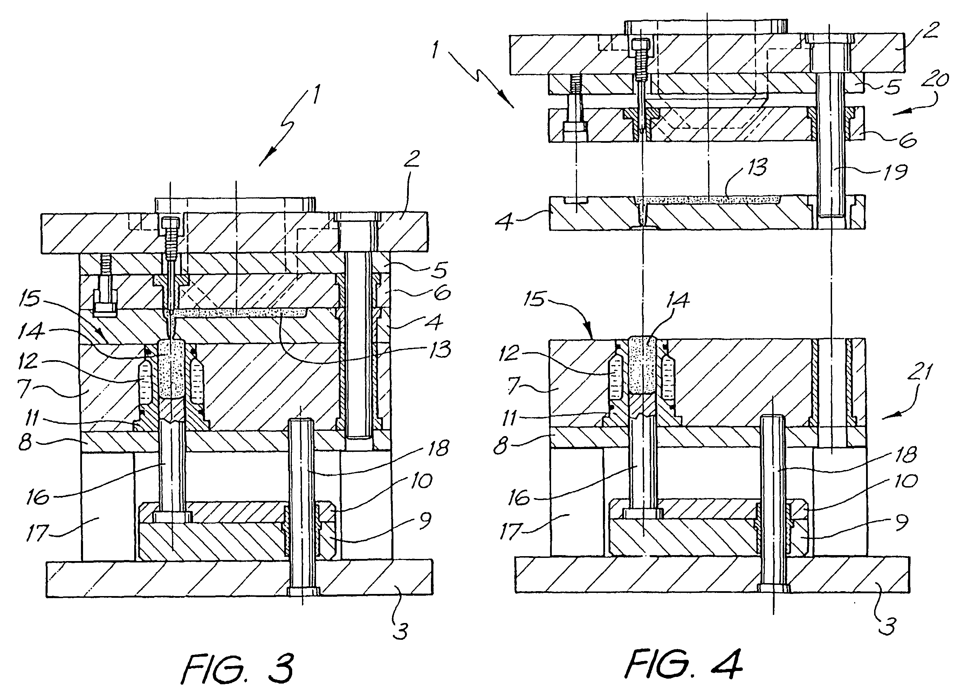

In operation, the moulding apparatus 1 closes the upper and lower portions of the mould (20 and 21 in Fig. 4) at the parting line 15 about the guide post 19. When the apparatus has achieved the fully closed position (Fig. 1) the injector units injects unfoamed thermoplastic material into the runner system 13 at high speed.

The plastic material is forced through channels 13 past the filling adjustment pin 22, which may be moved in or out to reduce or increase the amount of plastic material that flows past the filling adjustment pin 22 and through a reduced diameter gate 23. The filling adjustment pin 22 at each cavity 14 may be moved in or out as necessary to ensure that a uniform amount or weight of plastic material flows through the gate 23 into each cavity 14, enabling each cavity to produce corks of the same uniform physical characteristics. The raw material is further heated by shear as it passes through the small gate diameter 23. The increase in temperature causes the blowing agent to be activated and starts to expand the plastic raw material.

As the raw material expands (Fig. 2) the ejector system is forced back by two hydraulic cylinders mounted on the side of the mould. The hydraulic cylinders force the ejector plate 9 (slidably moulded on guide post 18 in the cavity space between ejector guide rails 17) back which retracts the cavity ejector pin 16. The rate of retraction of the cavity ejector pin matches the expansion of the plastic raw material.

Referring to Fig. 3, the hydraulic cylinders continue to move back until the ejector plate 9 comes into contact with the mould back plate 3. This determines the length of the synthetic cork, which can be varied as may be required. The plastic material cools to ejection temperature. Water 12 flowing in the cavity insert 11 cools the plastic raw material and solidifies the moulding.

When the plastic material reaches ejection temperature the mould opens along the parting line 15 and about the guide post 19. Fig. 4 shows the tool in the open position with the synthetic cork in the cavity insert. The machine ejector pin 16 moves forward (upwards) and ejects the cork out of the mould cavity 14 in the cavity insert 11. When the signal is given that the ejector has achieved its full forward stroke the injection moulding machine closes the mould as per Fig. 1 and the cycle is repeated.

In an alternative method for manufacturing moulded synthetic closures according to the invention, the or each mould cavity is disposed in a sprueless (hot runner) mould tool which includes means to seal the or each cavity at the entrance orifice immediately after the predetermined amount of thermoplastic material has been injected therein, to stop any further flow of thermoplastic feed material into the or each cavity, and keeping the entrance orifice sealed until the material has expanded in the mould cavity to form the synthetic closure having a liquid impervious outer skin and a foamed core with no appreciable void spaces or separations between the outer skin and the core.

To provide a synthetic cork closure which can function satisfactorily as a replacement for natural cork for use in closures for containers of medicine and food products such as wine and spirits, various factors need to be taken into account, including the type of thermoplastic resins and blends thereof. processing temperatures, injection pressures, injection speed, mould design and mould temperatures.

In producing synthetic cork closures, suitable amounts of each of the materials are mixed thoroughly prior to moulding. By way of example only, the closure for a container of wine or wine based product, comprises (or at least that part of the closure intended to contact the product) a moulded stopper of a flexible thermoplastic material, such as ethylene vinyl acetate and polypropylene copolymer having a foamed core within a liquid impervious skin, wherein the foamed core has been produced by blowing the thermoplastic material with a blowing agent including a thermally decomposable material which evolves carbon dioxide.

In addition to the resins and chemical blowing agent, pigments may be added to the raw material blend to give a cork-like colour or any other desired colour. By selecting the additives and the processing conditions as required, it is possible to fabricate a synthetic closure which reproduces the desirable properties of natural cork.

The frictional characteristics of the synthetic closure are such that the stopper firmly grips the internal surfaces of the neck of the bottle and is not liable to accidental displacement, but can be drawn out when required by use of a conventional corkscrew or the like. The gas barrier characteristics of the closure are such that a synthetic closure of conventional size (e. g. length about 44 mm and an uncompressed diameter of about 22 mm) will restrict the ingress of oxygen into the bottle.

Although an exemplary embodiment of the present invention has been shown and described, it will be apparent to those having ordinary skill in the art that a number of changes, modifications or alterations to the invention described herein may be made, none of which depart from the invention as defined in the appended claims. All such changes, modifications, and alterations should therefore be seen as being within the scope of the present invention.

It should be appreciated that the present invention provides a substantial advance in the moulding of synthetic closures and to methods and apparatus for making same, providing all of the herein-described advantages without incurring any relative disadvantages.

## Claims

1. A mould apparatus (1) for producing a moulded synthetic closure for a container, said mould apparatus (1) including one or more mould cavities (14), a piston (16) slidably engaged within each of said one or more cavities (14), wherein the distal end of said piston (16) constitutes a movable end wall of its associated mould cavity (14), and wherein said piston (16) acts as an ejector for removing the moulded product from the mould cavity (14)
**characterised in that**
the capacity of said one or more cavities (14) is variable during charging or filling of said one or more cavities (14) by virtue of the movement of said piston (16).

2. A mould apparatus as claimed in claim 1, further comprising means (22,23) to adjust the rate of filling of said one or more cavities (14).

3. A mould apparatus as claimed in claim 2, wherein the means to adjust the rate of filling of said one or more cavities (14) comprises an entrance gate or orifice (23) and a pin or valve (22) slidably engaged therein to adjust the circumferential space between the outer diameter of the pin valve (22) and the periphery of the gate inlet (23)

4. A method for manufacturing a moulded synthetic closure for a container, said synthetic closure having a substantially uniform cellular structure without large air trapped voids, said method comprising:
providing a mould cavity (14) having a moveable end wall opposite an entrance orifice to said mould cavity (14) wherein the moveable end wall is provided by an end face of a distal end of an ejector piston (16) slidably mounted in said mould cavity (14)
the injection at high speed of an expandable thermoplastic resinous material into said cavity (14) via said entrance orifice in an amount less than required to fill the mould cavity (14) and
allowing for the expansion of said resinous material against said end face
**characterised in that**
the capacity of said mould cavity (14) is variable during charging or filling thereof,
and whereby the capacity of the mould cavity (14) further increases in a controlled manner during filling as required to accommodate the expanding thermoplastic material with minimal entrainment of air or other gaseous material.

5. A method as claimed in claim 4 wherein said ejector piston (16) is moved in the direction opposite to the direction of travel to accommodate expansion of said thermoplastic material to eject the moulded synthetic closure from the mould cavity (14).

6. A moulded synthetic closure for a container when produced by a method as claimed in claim 4 or claim 5.

## Patentansprüche

1. Formvorrichtung (1) zum Herstellen eines geformten synthetischen Verschlusses für einen Behälter, wobei die genannte Formvorrichtung (1) Folgendes hat: wenigstens eine Formhöhlung (14), einen Kolben (16), der in der wenigstens einen Formhöhlung (14) jeweils verschiebbar in Eingriff ist, wobei das distale Ende des genannten Kolbens (16) eine bewegliche Endwand seiner assoziierten Formhöhlung (14) bildet, und wobei der genannte Kolben (16) als ein Ausstoßer zum Entfernen des geformten Produkts aus der Formhöhlung (14) dient,
**dadurch gekennzeichnet, dass**
das Fassungsvermögen der genannten wenigstens einen Höhlung (14) während des Beschickens oder Füllens der genannten wenigstens einen Höhlung (14) auf Grund der Bewegung des genannten Kolbens (16) veränderlich ist.

2. Formvorrichtung nach Anspruch 1, ferner umfassend ein Mittel (22, 23) zum Einstellen der Füllgeschwindigkeit der genannten wenigstens einen Höhlung (14).

3. Formvorrichtung nach Anspruch 2, bei der das Mittel zum Einstellen der Füllgeschwindigkeit der genannten wenigstens einen Höhlung (14) einen Eingusskanal oder eine Eingangsöffnung (23) und einen Stift oder ein Ventil (22) umfasst, der/das darin in verschiebbarem Eingriff ist, um den Umfangsraum zwischen dem Außendurchmesser des Stiftventils (22) und der Peripherie des Kanaleinlasses (23) einzustellen.

4. Verfahren zum Herstellen eines geformten synthetischen Verschlusses für einen Behälter, wobei der genannte synthetische Verschluss ein im Wesentlichen einheitliches Zellgefüge ohne große Lufteinschlüsse hat, wobei das genannte Verfahren Folgendes umfasst:
Bereitstellen einer Formhöhlung (14) mit einer beweglichen Endwand, die einer Eingangsöffnung zur genannten Formhöhlung (14) gegenüber liegt, wobei die bewegliche Endwand von einer Endfläche eines distalen Endes eines Ausstoßerkolbens (16), der verschiebbar in der genannten Formhöhlung (14) sitzt, bereitgestellt wird,
das Einspritzen bei hoher Geschwindigkeit eines expandierbaren thermoplastischen Harzmaterials in die genannte Höhlung (14) über die genannte Eingangsöffnung in einer kleineren Menge als der zum Füllen der Formhöhlung (14) erforderlichen und
Abwarten der Ausdehnung des genannten Harzmaterials gegen die genannte Endfläche,
**dadurch gekennzeichnet, dass**
das Fassungsvermögen der genannten Formhöhlung (14) während des Beschickens oder Füllens davon veränderlich ist
und wodurch das Fassungsvermögen der Formhöhlung (14) ferner während des Füllens wie erforderlich geregelt größer wird, um das sich ausdehnende thermoplastische Material mit minimalem Eintrag von Luft oder anderem gasförmigen Material aufzunehmen.

5. Verfahren nach Anspruch 4, bei dem der genannte Ausstoßerkolben (16) zum Ausstoßen des geformten synthetischen Verschlusses aus der Formhöhlung (14) in der Richtung bewegt wird, die der Bewegungsrichtung zum Aufnehmen der Ausdehnung des genannten thermoplastischen Materials entgegengesetzt ist.

6. Geformter synthetischer Verschluss für einen Behälter, wenn mit einem Verfahren nach Anspruch 4 oder Anspruch 5 hergestellt.

## Revendications

1. Appareil de moulage (1) permettant de produire une fermeture synthétique moulée pour un conteneur, ledit appareil de moulage (1) comprenant une ou plusieurs cavités de moulage (14), un piston (16) engagé de manière coulissable dans chacune desdites une ou plusieurs cavités (14), dans lequel l'extrémité distale dudit piston (16) forme une paroi d'extrémité mobile de sa cavité de moulage (14) associée, et dans lequel ledit piston (16) sert d'éjecteur pour retirer le produit moulé de la cavité de moulage (14) ;
**caractérisé en ce que**
la capacité desdites une ou plusieurs cavités (14) est variable pendant la charge ou le remplissage desdites une ou plusieurs cavités (14) du fait du déplacement dudit piston (16).

2. Appareil de moulage suivant la revendication 1, comprenant en outre un moyen (22, 23) pour régler la vitesse de remplissage desdites une ou plusieurs cavités (14).

3. Appareil de moulage suivant la revendication 2, dans lequel le moyen pour régler la vitesse de remplissage desdites une ou plusieurs cavités (14) comprend une entrée ou un orifice d'entrée (23) et un pointeau (22) s'y engageant de manière coulissable pour régler l'espace circonférentiel entre le diamètre extérieur du pointeau (22) et la périphérie de l'orifice d'entrée (23).

4. Procédé permettant de fabriquer une fermeture synthétique moulée pour un conteneur, ladite fermeture synthétique ayant une structure cellulaire pratiquement uniforme sans grandes bulles d'air, ledit procédé comprenant les étapes suivantes :
la formation d'une cavité de moulage (14) comportant une paroi d'extrémité mobile en face d'un orifice d'entrée à ladite cavité de moulage (14) dans laquelle la paroi d'extrémité mobile est formée par une face d'extrémité d'une extrémité distale d'un piston éjecteur (16) monté de manière coulissable dans ladite cavité de moulage (14) ; l'injection à vitesse élevée d'un matériau résineux thermoplastique expansible dans ladite cavité (14) par le biais dudit orifice d'entrée en une quantité inférieure à celle nécessaire pour remplir la cavité de moulage (14), et
l'expansion dudit matériau résineux contre ladite face d'extrémité ;
**caractérisé en ce que**
la capacité de ladite cavité de moulage (14) est variable pendant la charge ou le remplissage de celle-ci, et
de sorte que la capacité de la cavité de moulage (14) augmente encore de manière contrôlée pendant le remplissage de manière à recevoir le matériau thermoplastique en expansion avec un entraînement minimum d'air ou d'une autre substance gazeuse.

5. Procédé suivant la revendication 4, dans lequel ledit piston éjecteur (16) se déplace dans la direction opposée à la direction de déplacement pour permettre l'expansion dudit matériau thermoplastique pour éjecter la fermeture synthétique moulée de la cavité de moulage (14).

6. Fermeture synthétique moulée pour un conteneur produite par un procédé suivant la revendication 4 ou 5.
